# EUROPÄISCHE PATENTSCHRIFT

(11) **EP 2 251 130 B1**
(45) Veröffentlichungstag und Bekanntmachung des Hinweises auf die Patenterteilung: **11.08.2021**
(21) Anmeldenummer: 10004500.4
(22) Anmeldetag: 28.04.2010
(51) Int. Cl.: B23D 47/08, B23D 45/06

(54) **Hubvorrichtung für ein Sägeblatt einer Maschine zum Bearbeiten von Werkstücken aus Holz, Kunststoff und dergleichen**
Lifting device for a saw blade of a machine for machining workpieces made of wood, plastic and similar
Dispositif de levage pour une lame de scie d'une machine destinée au traitement de pièces usinées en bois, en matière synthétique et analogues

(30) Priorität: 13.05.2009 DE 102009022336
(43) Veröffentlichungstag der Anmeldung: 17.11.2010
(73) Patentinhaber: Weinig Dimter GmbH & Co. KG, 89257 Illertissen (DE)
(72) Erfinder: Schmid, Thomas, 89129 Langenau (DE)
(74) Vertreter: Kohl, Karl-Heinz

(56) Entgegenhaltungen:
- WO-A1-89/10227
- DE-C- 879 598
- DE-U1- 29 606 300
- DE-U1-202007 008 554
- US-A- 3 213 909

## Beschreibung

Die Erfindung betrifft eine Sägemaschine mit einer Hubvorrichtung für ein Sägeblatt zum Bearbeiten von Werkstücken aus Holz, Kunststoff und dergleichen nach dem Oberbegriff des Anspruches 1 bzw. 4.

Auf Holzbearbeitungsmaschinen müssen Werkstücke häufig gesägt werden. Hierzu wird ein Kreissägeblatt aus einer Ruhestellung, in der es sich unterhalb eines Transportweges des Holzwerkstückes befindet, in eine Schneideposition bewegt und dadurch das Holzwerkstück durchgetrennt. Zum Weitertransport des Holzwerkstückes muss das Kreissägeblatt wieder in die untere Ruhestellung gebracht werden. Je nach Dicke des Werkstückes muss das Kreissägeblatt unterschiedlich weit bewegt werden. Damit die Bewegung des Kreissägeblattes innerhalb kurzer Zeit erfolgt, werden verhältnismäßig kurze Kurbeln eingesetzt, die eine höhere Drehzahl des Kurbeltriebes erlauben. Die kurze Kurbel beschränkt allerdings den Hubweg des Sägeblattträgers und damit des Kreissägeblattes.

Bei einer bekannten Sägemaschine (US 3 213 909 A) wird ein Sägeblatt an seinen beiden Enden mittels jeweils eines Sägeblattträgers eingespannt. Beide Sägeblattträger sind jeweils über eine Schubstange mit dem einen Ende eines zweiarmigen Hebels verbunden. Die anderen Arme der beiden Hebel sind über eine Spannvorrichtung miteinander verbunden. An den einen Arm des einen Hebels ist eine Kurbel angelenkt, mit der dieser Hebel während des Sägevorganges um eine Achse geschwenkt wird. Das Sägeblatt ragt durch eine Öffnung in einem Auflagetisch, auf dem das zu sägende Werkstück transportiert wird. Eine Verstellung des Sägeblattes in eine Ruhestellung ist nicht vorgesehen. Da die Schubstangen sowie die Kurbel nicht in Bezug auf die Hebel verstellt werden können, lässt sich der Sägehub des Sägeblattes nicht verändern.

Bei einer anderen bekannten Sägemaschine (WO 89/10227 A1), gemäß dem Oberbegriff des Anspruchs 1 und gemäß dem Oberbegriff des Anspruchs 4, ist am Sägeblattträger, der als einarmiger Hebel ausgebildet ist, ein Kreissägeblatt drehbar gelagert. Der Sägeblattträger ist mit einem Kurbeltrieb verbunden, der eine Kurbel aufweist. Mit ihr kann der Sägeblattträger aus einer Ruhestellung in eine Arbeitsstellung verstellt werden, in der das Kreissägeblatt das Werkstück durchsägt. Die Sägemaschine ist mit einer Sägezyklus-Steuerung versehen, mit der die Sägefrequenz sowie der Bewegungsablauf innerhalb eines Sägezyklus eingestellt werden können. Die Hubbewegung ist allerdings bei jedem Sägezyklus gleich, unabhängig davon, wie dick die zu sägenden Werkstücke sind.

Der Erfindung liegt die Aufgabe zugrunde, die gattungsgemäße Sägemaschine so auszubilden, dass das Sägeblatt um einen großen Hubweg verstellt werden kann, dabei dennoch die Verstellzeit gering ist und somit kurze Sägezeiten erreicht werden.

Diese Aufgabe wird bei der gattungsgemäßen Sägemaschine erfindungsgemäß mit den kennzeichnenden Merkmalen des Anspruches 1 bzw. 4 gelöst.

Bei der erfindungsgemäßen Sägemaschine gemäß Anspruch 1 ist die Kurbel des Kurbeltriebes über die Schubstange mit der Übersetzungsstufe in Form des zweiarmigen Hebels gekoppelt, über den die Kurbel mit dem Sägeblattträger verbunden ist. Dadurch ist es möglich, einerseits einen großen Hubweg zu erreichen, andererseits die Verstellzeit, um das Kreissägeblatt aus der Ruhestellung in die Arbeitsstellung bzw. Schneideposition zu verstellen, gering zu halten. Dadurch können die Werkstücke innerhalb kürzester Zeit entsprechend gesägt werden. Während der Verstellung des Kreissägeblattes erfolgt der Sägevorgang. Nach dem Sägevorgang wird das Kreissägeblatt wieder zurück in die Ruhestellung bewegt. Mit Hilfe des zweiarmigen Hebels lässt sich der von der Kurbel zurückgelegte Weg in gewünschtem Maße in den Verstellweg des Sägeblattträgers übersetzen. Die Kurbel selbst muss darum nur kleine Wege zurücklegen, was innerhalb kürzester Zeit mit Hilfe des Kurbeltriebes erreicht werden kann. Der zweiarmige Hebel sorgt dann dafür, dass der Sägeblattträger den entsprechenden Hubweg ausführt. Der Sägeblattträger, der gelenkig mit der Schubstange verbunden ist, die ihrerseits mit der Übersetzungsstufe gekoppelt ist, wird durch die Schubstange aus der Ruhestellung in die Arbeitsstellung verschwenkt. Die Kurbel greift an dem einen und die Schubstange an dem anderen Hebelarm an, der wenigstens zwei Anschlüsse für die Schubstange aufweist. Die wenigstens zwei Anschlüsse ermöglichen es, dass bei gegebenem Verstellweg der Kurbel das Übersetzungsverhältnis sehr einfach eingestellt werden kann. Ist die Schubstange mit dem der Schwenkachse des zweiarmigen Hebels am nächsten liegenden Anschluss verbunden, ist der maximale Hubweg kleiner als in dem Fall, in dem die Schubstange mit dem den größten Abstand von der Schwenkachse aufweisenden Anschluss verbunden ist. Auf diese Weise ist es sehr einfach möglich, den maximalen Hubweg zu verändern, indem die Schubstange wahlweise an einen der Anschlüsse angeschlossen wird. Je nach Länge der beiden Hebelarme wird das gewünschte Übersetzungsverhältnis erreicht.

Die Hebelarme des zweiarmigen Hebels liegen unter einem stumpfen Winkel zueinander, so dass der Kurbeltrieb mit der Schubstange sowie die Schwenklagerung des Sägeblattträgers raumsparend angeordnet werden können. Die Schwenkachse des zweiarmigen Hebels liegt in der V-Spitze des zweiarmigen Hebels.

Es ist aber auch möglich, die Schwenkachse am einen Hebelarm des zweiarmigen Hebels vorzusehen, vorzugsweise am freien Ende dieses Hebelarms.

In diesem Falle greift die Kurbel an der V-Spitze des zweiarmigen Hebels gelenkig an.

Um das Übersetzungsverhältnis zu verändern, ist es möglich, dass die Kurbel längs des einen Hebelarms des zweiarmigen Hebels verstellbar ist.

Darüber hinaus ist es in vorteilhafter Weise möglich, dass die Schubstange längs des Sägeblattträgers verstellbar ist.

Die Sägemaschine nach Anspruch 5 weist die Übersetzungsstufe eine schiefe Ebene in Form eines einarmigen Hebels auf. Die Schubstange und die Kurbel sind in diesem Falle beim Verstellen des Kreissägeblattes aus der Ruhestellung in die Arbeitsstellung und zurück längs dieser schiefen Ebene verschiebbar. Dadurch wird erreicht, dass bei langer Kurbel das Kreissägeblatt innerhalb kurzer Zeit einen maximalen Hub ausführen kann.

Vorteilhaft lässt sich der Neigungswinkel der schiefen Ebene verstellen, wodurch in einfacher Weise der maximale Hub der Hubvorrichtung eingestellt und damit an die Dicke des zu sägenden Werkstückes angepasst werden kann.

Damit bei den verschiedenen Stellungen eine problemlose Verstellung möglich ist, sind die Kurbel und/oder die Schubstange vorteilhaft längenveränderlich.

Weitere Merkmale der Erfindung ergeben sich aus den weiteren Ansprüchen, der Beschreibung und den Zeichnungen.

Die Erfindung wird nachstehend anhand einiger in den Zeichnungen dargestellter Ausführungsformen näher erläutert. Es zeigen
- Fig. 1: in Seitenansicht eine erste Ausführungsform einer erfindungsgemäßen Sägemaschine mit einer Hubvorrichtung in einer Grundstellung,
- Fig. 2: die Hubvorrichtung gemäß Fig. 2 in einer maximalen Hubstellung,
- Fig. 3: die Hubvorrichtung in einer weiteren Hubstellung,
- Fig. 4 bis Fig. 7: in schematischer Darstellung verschiedene Stellungen der Hubvorrichtung,
- Fig. 8 bis Fig. 10: jeweils in schematischer Darstellung weitere Ausführungsformen von Hubvorrichtungen.

Die Hubvorrichtung dient dazu, ein Kreissägeblatt 1 aus einer Grundstellung unterhalb eines Maschinentisches 2 aufwärts in eine Arbeitsstellung zu verstellen, in der das Kreissägeblatt 1 auf dem Maschinentisch 2 befindliche Werkstücke bearbeitet. Während dieser Verstellung wird das Werkstück durch das Kreissägeblatt 1 gesägt, sobald es über den Maschinentisch 2 gelangt und mit dem auf ihm befindlichen Werkstück in Eingriff kommt. Die Hubvorrichtung kann beispielsweise an einer Holzbearbeitungsmaschine vorgesehen sein.

Die Hubvorrichtung hat einen Antriebsmotor 3, der jede Art von Motor sein kann. Auf einer aus dem Motorgehäuse 4 ragenden Motorwelle 5 sitzt drehfest eine Kurbelscheibe 6, an der eine Kurbel 7 mit Abstand zur Achse der Motorwelle 5 angelenkt ist. Das andere Ende der Kurbel 7 ist am freien Ende eines Hebelarmes 8 einer Wippe 9 angelenkt. Sie ist um eine parallel zur Motorwelle 5 liegende Achse 10 schwenkbar an der Maschine gelagert. Am freien Ende des anderen Hebelarmes 11 der Wippe 9 ist das eine Ende einer Schubstange 12 angelenkt. Ihr anderes Ende ist mit dem freien Ende eines Armes 13 gelenkig verbunden, dessen anderes Ende um eine parallel zur Motorwelle 5 liegende Achse 14 schwenkbar an einem maschinenfesten Ständer 15 gelagert ist. Der Arm 13 trägt das Sägeblatt 1, das um eine parallel zur Motorwelle 5 liegende Achse 16 drehbar im Arm 13 gelagert ist. Der Drehantrieb des Kreissägeblattes 1 erfolgt in bekannter Weise.

Die beiden Hebelarme 8, 11 der Wippe 9 liegen stumpfwinklig zueinander. Die Schwenkachse 10 erstreckt sich durch die V-Spitze der Wippe 9.

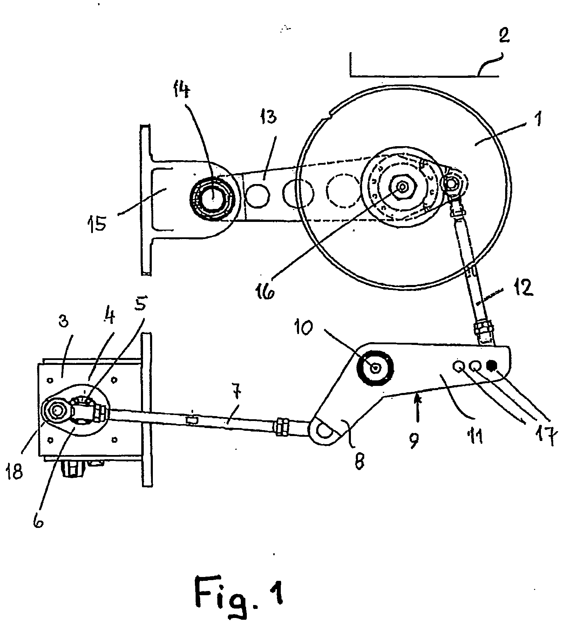

Fig. 1 zeigt die Hubvorrichtung in der Grundstellung. Das Kreissägeblatt 1 ist so weit abgesenkt, dass es sich im Bereich unterhalb des Maschinentisches 2 befindet. Die Motorwelle 5 befindet sich in einer Stellung, in der sich die Gelenkachse 18, mit der die Kurbel 7 an der Kurbelscheibe 6 angelenkt ist, sich auf der der Schwenkachse 10 der Wippe 9 gegenüberliegenden Seite der Motorwelle 5 befindet. In dieser Stellung ist die Wippe 9 derart geschwenkt, dass die Schubstange 12 den Arm 13 so weit um die Achse 14 im Uhrzeigersinn geschwenkt hat, dass das Kreissägeblatt 1 mit nur geringem Abstand unterhalb des Maschinentisches 2 liegt.

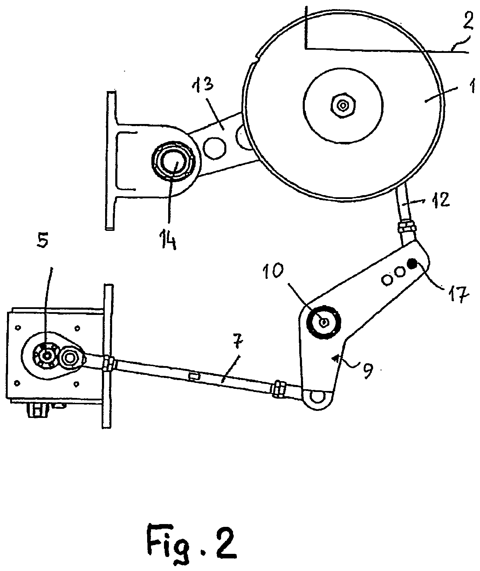

Soll mit dem Kreissägeblatt 1 gearbeitet werden, muss es aufwärts verstellt werden. Hierzu wird die Motorwelle 5, ausgehend von der Grundstellung gemäß Fig. 1, entgegen dem Uhrzeigersinn gedreht. Über die Kurbel 7 wird die Wippe 9 entgegen dem Uhrzeigersinn um die Achse 10 geschwenkt. Dies hat zur Folge, dass über die Schubstange 12 der Arm 13 um die Achse 14 ebenfalls entgegen dem Uhrzeigersinn geschwenkt wird. Dadurch wird das am Arm 13 drehbar gelagerte Kreissägeblatt 1 aufwärts in die Arbeitsstellung verstellt, die in Fig. 2 dargestellt ist. Mit dem Kreissägeblatt 1 kann dann ein auf dem Maschinentisch 2 befindliches Werkstück während des Verstellvorganges gesägt werden.

In Fig. 2 ist der maximale Hub des Kreissägeblattes 1 dargestellt. Je nach Fertigungsaufgabe kann die Motorwelle 5, ausgehend von der Grundstellung gemäß Fig. 1, auch um kleinere Winkel gedreht werden, so dass dementsprechend ein geringerer Hub des Kreissägeblattes vorgenommen wird.

Da die Schubstange 12 in die äußerste Einhängeöffnung 17 der Wippe 9 eingehängt ist, kann der maximale Hub mit dieser Hubvorrichtung erreicht werden.

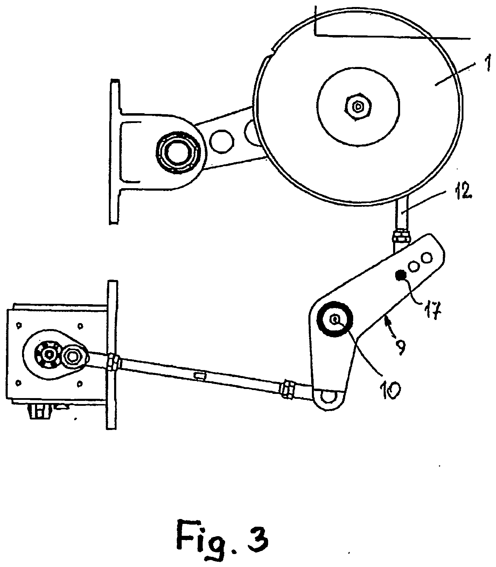

Fig. 3 zeigt beispielhaft den Fall, dass die Schubstange 12 in die der Schwenkachse 10 der Wippe 9 benachbarte Einhängeöffnung 17 eingehängt ist. Dies hat zur Folge, dass der maximale Hub des Kreissägeblattes 1 kleiner ist als in dem Fall, in dem die Schubstange 12 in die äußerste Einhängeöffnung 17 eingehängt ist.

Die Kurbelscheibe 6 wird zwischen der Grundstellung (Fig. 1) und der maximalen Hubstellung (Fig. 2 und 3) um einen Winkel von etwa 180° gedreht. Bereits nach kurzem Drehwinkel gelangt das Kreissägeblatt 1 in einen Bereich oberhalb des Maschinentisches 2, so dass schon nach kurzem Hubweg gesägt werden kann. Die Sägezeiten werden dadurch sehr gering gehalten, was sich auf die gesamte Leistung der mit einer solchen Hubvorrichtung ausgestatteten Maschine auswirkt. Die Zwischenübersetzung zwischen der Kurbel 7 und der Schubstange 12 in Form der zweiarmigen Wippe 9 ermöglicht es, trotz der Verwendung einer langen Kurbel 7 den Verstellweg des Kreissägeblattes 1 aus der Grundstellung unterhalb des Maschinentisches 2 in die Arbeitsstellung oberhalb des Maschinentisches 2 sehr gering zu halten. Dadurch können in der beschriebenen Weise die Sägezeiten gering gehalten werden.

Die Kurbel 7, die Schubstange 12 und der Arm 13 liegen etwa in einer gemeinsamen Ebene, wobei sich die Kurbel 7 im Bereich unterhalb des Armes 13 befindet. Die Hubvorrichtung nimmt dann nur wenig Bauraum in Anspruch.

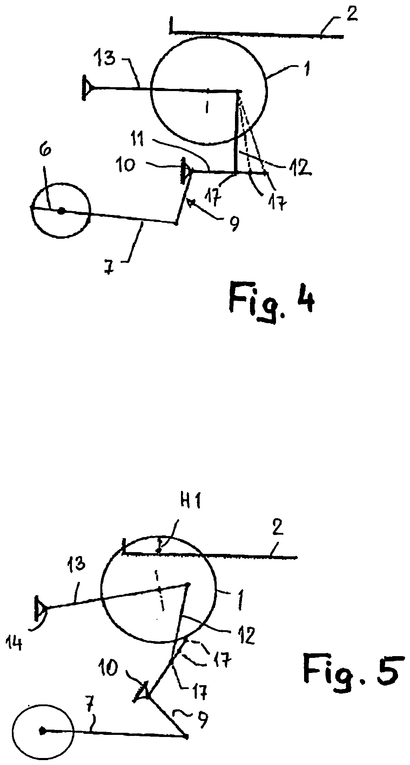

Fig. 4 zeigt die Hubvorrichtung gemäß den Fig. 1 bis 3 in schematischer Darstellung. Die Kurbel 7 befindet sich in der Grundstellung, in der das Sägeblatt 1 mit geringem Abstand unterhalb des Maschinentisches 2 angeordnet ist. Die Schubstange 12 ist in die der Schwenkachse 10 der Wippe 9 am nächsten liegende Einhängeöffnung 17 eingehängt. Durch gestrichelte Linien ist angegeben, dass die Schubstange 12 auch in eine der anderen Einhängeöffnungen 17 im Hebelarm 11 der Wippe 9 eingehängt werden kann und sich die Untertischposition des Kreissägeblattes 1 nur unwesentlich verändert, wenn dieser Verstellvorgang vorgenommen wird. Erreicht wird dieser Vorteil dadurch, dass die Einhängeöffnungen 17 im Hebelarm 11 der Wippe 9 in der Grundstellung auf einer Ebene liegen.

Fig. 5 zeigt die der Fig. 2 entsprechende Stellung, in der das Sägeblatt 1 über den Maschinentisch 2 vorsteht und das auf ihm befindliche Werkstück bearbeiten kann. Die Kurbelscheibe hat sich um etwa 180° gedreht, so dass die Kurbel 7 die Wippe 9 um die Achse 10 gegen den Uhrzeigersinn geschwenkt hat. Dementsprechend ist auch der Arm 13 über die Schubstange 12 um die maschinenfeste Achse 14 entgegen dem Uhrzeigersinn geschwenkt worden. Da die Schubstange 12 in die der Schwenkachse 10 benachbarte Einhängeöffnung 17 der Wippe 9 eingehängt ist, ist der maximale Hub der Hubvorrichtung entsprechend gering, so dass das Sägeblatt 1 in dieser maximalen Hubstellung um das Maß H1 über den Maschinentisch 2 vorsteht.

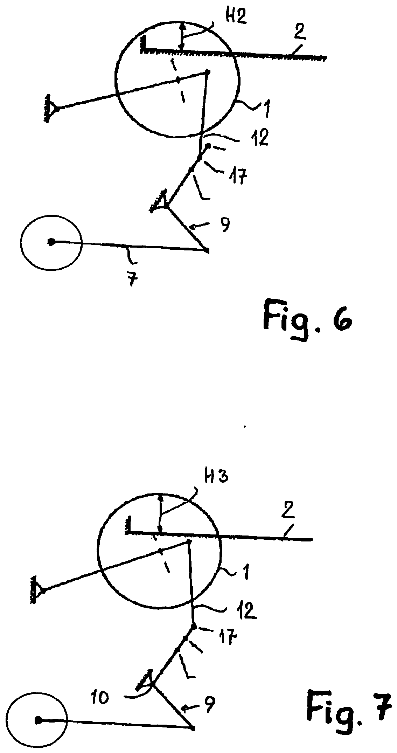

Fig. 6 zeigt die maximale Hubstellung des Sägeblattes 1, wenn die Schubstange 12 in die mittlere Einhängeöffnung 17 der Wippe 9 eingehängt ist. Dann wird bei der 180°-Drehung der Kurbelscheibe 6 ein größerer Überstand H2 des Kreissägeblattes 1 über den Maschinentisch 2 erreicht.

Fig. 7 schließlich zeigt die maximale Hubstellung des Kreissägeblattes 1, wenn die Schubstange 12 in die am weitesten von der Schwenkachse 10 der Wippe 9 entfernt liegende Einhängeöffnung 17 eingehängt ist. In dieser Stellung ist der Überstand H3 des Kreissägeblattes 1 über den Maschinentisch 2 am größten.

Wie ein Vergleich der Fig. 5 bis 7 zeigt, kann der maximale Überstand H1 bis H3 des Kreissägeblattes 1 über den Maschinentisch 2 dadurch verändert werden, dass die Schubstange 12 in die entsprechenden Einhängeöffnungen 17 der Wippe 9 eingehängt wird. Im Ausführungsbeispiel ist der Hebelarm 11 der Wippe 9 mit drei Einhängeöffnungen 17 versehen. Selbstverständlich kann die Wippe 9 auch nur eine einzige Einhängeöffnung 17 oder nur zwei oder mehr als drei Einhängeöffnungen aufweisen, so dass je nach Anforderung unterschiedliche Hübe eingestellt werden können.

Der Anwender kann die Hubvorrichtung sehr einfach einstellen, indem er die Schubstange 12 je nach Bedarf in eine der Einhängeöffnungen 17 einhängt. Die Schubstange 12 ist längenverstellbar, so dass er die Länge der Schubstange 12 beim Umsetzen in eine der Einhängeöffnungen 17 einfach anpassen kann. Da auch die Kurbel 7 längenveränderbar ist, kann die Hubvorrichtung einfach umgestellt werden.

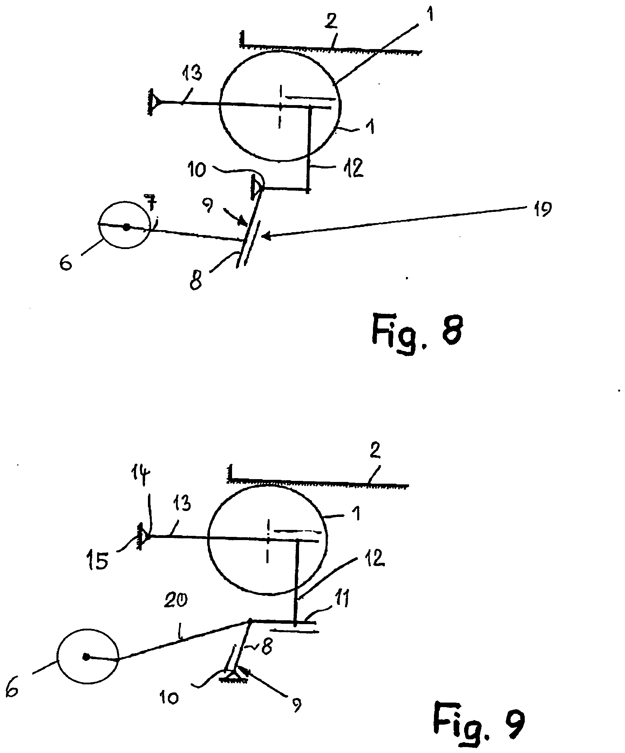

Fig. 8 zeigt eine Ausführungsform einer Hubvorrichtung, bei der die Anlenkung der Kurbel 7 längs des Hebelarmes 8 der Wippe 9 verstellt werden kann. Hierzu ist eine Schiebelagerung 19 vorgesehen, an welche das Kurbelende angelenkt ist und die in Pfeilrichtung längs des Hebelarmes 9 verschoben werden kann. Je näher die Anlenkung der Kurbel 7 an der Schwenkachse 10 der Wippe 9 liegt, desto größer ist der maximale Hub, den das Kreissägeblatt 1 ausführen kann. Mittels der Schiebelagerung 19 lässt sich vorteilhaft stufenlos die Anlenkung der Kurbel 7 am Hebelarm 8 einstellen. In der jeweiligen Einstelllage wird die Schiebelagerung 19 in bekannter Weise arretiert.

Der Antrieb der Kurbel 7 erfolgt wie bei der vorigen Ausführungsform, indem die Kurbelscheibe 6 gedreht und dementsprechend die Kurbel 7 bewegt wird. Sie schwenkt die Wippe 9 um die Schwenkachse 10, wodurch über die Schubstange 12 und den Arm 13 das Sägeblatt 1 in der beschriebenen Weise verstellt wird. In Fig. 8 nimmt das Kreissägeblatt 1 seine Grundstellung ein, in der es sich mit möglichst geringem Abstand unterhalb des Maschinentisches 2 befindet. Die Kurbelscheibe 6 (Fig. 1) wird um etwa 180° gedreht, wodurch die Wippe 9 um die Achse 10 geschwenkt und über die Schubstange 12 und den Arm 13 das Kreissägeblatt 1 aufwärts geschwenkt wird, so dass es über den Maschinentisch 2 vorsteht. Aufgrund der Schiebelagerung 19 kann die gelenkige Anbindung der Kurbel 7 an den Hebelarm 8 der Wippe 9 stufenlos längs des Hebelarmes 8 verstellt und somit der Hub des Kreissägeblattes 1 sehr feinfühlig verstellt werden. Hierzu trägt auch bei, dass die Kurbel 7 in ihrer Länge veränderbar ist, so dass die Länge der Kurbel 7 an die Lage der Schiebelagerung 19 längs des Hebelarms 8 der Wippe 9 angepasst werden kann.

Fig. 8 zeigt eine weitere Ausführungsform der Hubvorrichtung. Bei ihr ist das eine Ende der Schubstange 12 längs des Arms 13 vorzugsweise stufenlos verstellbar. Auch auf diese Weise kann der Hub des Kreissägeblattes 1 eingestellt werden, vorzugsweise stufenlos. Da die Schubstange 12 vorteilhaft längenveränderlich ist, kann die Verstellung der Schubstange 12 längs des Armes problemlos vorgenommen werden.

Bei einer vorteilhaften Ausführungsform ist es möglich, die Anlenkung der Kurbel 7 am Hebelarm 8 der Wippe 9 sowie der Schubstange 12 am Arm 13 verstellbar zu gestalten. Dann kann der Hub optimal eingestellt und an den jeweiligen Einsatzfall angepasst werden. Auch ist, wie auch bei den anderen Ausführungsbeispielen, durch diese Verstellung des Anlenkpunktes der Kurbel und/oder der Schubstange eine Anpassung an unterschiedliche Durchmesser der Kreissägeblätter 1 hinsichtlich des Hubweges möglich.

Fig. 9 zeigt eine nicht erfindungsgemäße Ausführungsform, bei der die Schwenkachse 10 der Wippe 9 längs des Hebelarmes 8 verstellbar ist. Im Unterschied zu den vorigen Ausführungsbeispielen liegt die Schwenkachse 10 der Wippe 9 nicht mehr im V-Punkt zwischen den beiden Hebelarmen 8, 11. Die Lage der Schwenkachse 10 bezüglich des Hebelarmes 8 der Wippe 9 kann bei dieser Ausführungsform eingestellt werden. Da die Schwenkachse 10 maschinenfest vorgesehen ist, wird der Hebelarm 8 der Wippe 9 relativ zur Schwenkachse 10 in Pfeilrichtung verschoben. Auf diese Weise kann der maximale Hubweg des Kreissägeblattes 1 eingestellt werden. Die Kurbel 7 ist gelenkig mit dem einen Ende einer Schubstange 20 verbunden, deren anderes Ende an den V-Punkt der Wippe 9 angelenkt ist. Die Schubstange 12 ist mit ihren beiden Enden längs des Hebelarmes 11 der Wippe 9 und längs des Armes 13 verstellbar. Der Arm 13 selbst ist wiederum um die Achse 14 schwenkbar am maschinenfesten Ständer 15 gelagert und trägt das Kreissägeblatt 1.

Fig. 9 zeigt das Kreissägeblatt 1 in der Grundstellung, in der es sich mit nur geringem Abstand unterhalb des Maschinentisches 2 befindet. Die Kurbelscheibe 6, an der die Kurbel 7 angelenkt ist, wird aus der Grundstellung gemäß Fig. 9 im Uhrzeigersinn um etwa 180° gedreht. Dadurch wird die Wippe 9 um ihre Schwenkachse 10 entgegen dem Uhrzeigersinn geschwenkt, wodurch über die Schubstange 12 und den Arm 13 das Kreissägeblatt 1 in die Gebrauchsstellung angehoben wird, in der es über den Maschinentisch 2 ragt. Die Schubstange 12 ist mit ihren beiden Enden gelenkig mit dem Hebelarm 11 und dem Arm 13 verbunden. Je nach Lage der Schwenkachse 10 auf dem Hebelarm 8 der Wippe 9 ergeben sich unterschiedliche Hübe für das Kreissägeblatt 1. Da die Schwenkachse 10 maschinenfest angeordnet ist, wird der Hebelarm 8 der Wippe 9 bei der Verstellung relativ zur Schwenkachse 10 verschoben. Aufgrund der beschriebenen Einstellmöglichkeiten kann das Kreissägeblatt 1 in der Grundstellung mit nur geringem Abstand unterhalb des Maschinentisches 2 eingestellt werden. Insbesondere kann die Einstellung auch unter Berücksichtigung des Durchmessers des Kreissägeblattes 1 erfolgen. Da die Schubstange 12 und vorteilhaft auch die Schubstange 20 längenveränderlich sind, kann die Verstellung feinfühlig und einfach vorgenommen werden.

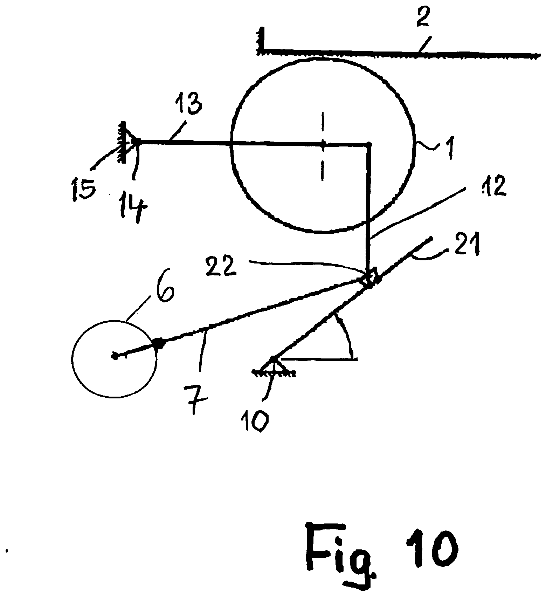

Fig. 10 zeigt eine Ausführungsform, bei der anstelle einer V-förmigen Wippe ein einarmiger Hebel 21 vorgesehen ist, dessen eines Ende um die Achse 10 schwenkbar ist. Auf dem Hebel 21 ist das eine Ende der Kurbel 7 in dessen Längsrichtung verschiebbar. An der hierfür vorgesehenen Schiebelagerung 22 sind das von der Kurbelscheibe 6 (Fig. 1) abgewandte Ende der Kurbel 7 sowie das in Fig. 10 untere Ende der Schubstange 12 angelenkt. Das andere Ende der Schubstange 12 ist gelenkig mit dem Arm 13, vorteilhaft mit dessen freiem Ende, verbunden, der um die Achse 14 schwenkbar am maschinenfesten Ständer 15 gelagert ist.

Fig. 10 zeigt wiederum die Grundstellung, in der sich das Kreissägeblatt 1 mit nur geringem Abstand unterhalb des Maschinentisches 2 befindet. Wird die Kurbelscheibe 6 (Fig. 1) entgegen dem Uhrzeigersinn gedreht, wird die Schiebelagerung 22 längs des Hebels 21 verschoben. Dies hat zur Folge, dass über die Schubstange 12 der Arm 13 ebenfalls entgegen dem Uhrzeigersinn um die Achse 14 geschwenkt wird. Dadurch gelangt das Kreissägeblatt 1 in die Arbeitsstellung, in der es über den Maschinentisch 2 ragt.

Um den Hub zu verändern bzw. an den Durchmesser des Kreissägeblattes 1 anzupassen, kann die Neigung des Hebels 21 durch Verstellung um den Winkel x verändert werden. Der Hebel 21 bildet eine schiefe Ebene, längs der die Schiebelagerung 22 bei der Betätigung der Hubvorrichtung verschoben wird. Je nach Größe des Neigungswinkels x kann der Hub des Kreissägeblattes 1 variiert werden.

## Patentansprüche

1. Sägemaschine mit einem Maschinentisch (2) und mit einer Hubvorrichtung für ein Sägeblatt (1) zum Bearbeiten von Werkstücken aus Holz, Kunststoff und dergleichen, mit einem Kurbeltrieb, der eine Kurbel (7) aufweist, und mit einer Schubstange (12), die mit einem das Sägeblatt (1) tragenden Sägeblattträger (13) verbunden und mit einer Übersetzungsstufe (9) gekoppelt ist, über die die Kurbel (7) mit dem Sägeblattträger (13) verbunden ist und die einen zweiarmigen Hebel (9)) aufweist, der um eine Schwenkachse (10) schwenkbar ist, wobei das Sägeblatt ein Kreissägeblatt (1) ist und mit der Kurbel (7) der Sägeblattträger (13) aus einer Ruhestellung, in der das Kreissägeblatt (1) unterhalb des Maschinentisches (2) angeordnet ist, in eine Arbeitsstellung verstellbar ist, in der das Kreissägeblatt (1) die auf dem Maschinentisch (2) befindlichen Werkstücke bearbeitet, **dadurch gekennzeichnet, dass** die Hebelarme (8, 11) des zweiarmigen Hebels (9) stumpfwinklig zueinander liegen, dass die Schwenkachse (10) in der V-Spitze des zweiarmigen Hebels (9) liegt, dass an den einen Hebelarm (8) die Kurbel (7) angelenkt ist, und dass zur Anlenkung der Schubstange (12) der andere Hebelarm (11) wenigstens zwei Anschlüsse (17) aufweist, die unterschiedlichen Abstand von der Schwenkachse (10) des zweiarmigen Hebels (9) haben.

2. Sägemaschine nach Anspruch 1,
**dadurch gekennzeichnet, dass** die Kurbel (7) längs des einen Hebelarmes (8) des zweiarmigen Hebels (9) verstellbar ist.

3. Sägemaschine nach einem der Ansprüche 1 und 2, **dadurch gekennzeichnet, dass** die Schubstange (12) längs des Sägeblattträgers (13) verstellbar ist.

4. Sägemaschine mit einem Maschinentisch (2) und mit einer Hubvorrichtung für ein Sägeblatt (1) zum Bearbeiten von Werkstücken aus Holz, Kunststoff und dergleichen, mit einem Kurbeltrieb, der eine Kurbel (7) aufweist, und mit einer Schubstange (12), die mit einem das Sägeblatt (1) tragenden Sägeblattträger (13) verbunden und mit einer Übersetzungsstufe (21) gekoppelt ist, über die die Kurbel (7) mit dem Sägeblattträger (13) verbunden ist und die einen Hebel aufweist, der um eine Schwenkachse (10) schwenkbar ist, wobei das Sägeblatt ein Kreissägeblatt (1) ist und mit der Kurbel (7) der Sägeblattträger (13) aus einer Ruhestellung, in der das Kreissägeblatt (1) unterhalb des Maschinentisches (2) angeordnet ist, in eine Arbeitsstellung verstellbar ist, in der das Kreissägeblatt (1) die auf dem Maschinentisch (2) befindlichen Werkstücke bearbeitet, **dadurch gekennzeichnet, dass** die Übersetzungsstufe (21) eine schiefe Ebene in Form eines einarmigen Hebels aufweist, längs dem die Schubstange (12) und die Kurbel (7) verschiebbar sind.

5. Sägemaschine nach Anspruch 4 **dadurch gekennzeichnet, dass** der Neigungswinkel x der schiefen Ebene (21) verstellbar ist.

6. Sägemaschine nach einem der Ansprüche 1 bis 5, **dadurch gekennzeichnet, dass** die Kurbel (7) und/oder die Schubstange (12) längenveränderlich sind.

## Claims

1. Sawing machine with a machining table (2) and with a lifting device for a saw blade (1) for processing workpieces made of wood, plastic, and the like, with a crank drive which has a crank (7), and with a push rod (12) which is connected to a saw blade holder (13) supporting the saw blade (1) and is coupled to a transmission ratio (9), via which the crank (7) is connected to the saw blade holder (13) and which has a two-armed lever (9) which is pivotable about a pivot axis (10),
wherein the saw blade is a circular saw blade (1) , and the saw blade holder (13) is displaceable using the crank (7) from an idle position, in which the circular saw blade (1) is arranged underneath the machining table (2), into a working position, in which the circular saw blade (1) processes the workpieces located on the machining table (2),
**characterized in that**
the lever arms (8, 11) of the two-armed lever (9) are at an obtuse angle to one another, the pivot axis (10) lies in the V-tip of the two-armed lever (9), the crank (7) is hinged to the one lever arm (8), and the other lever arm (11) for hinging the push rod (12) has at least two connections (17), which have different distances from the pivot axis (10) of the two-armed lever (9).

2. Sawing machine according to claim 1,
**characterized in that** the crank (7) is adjustable along the one lever arm (8) of the two-armed lever (9) .

3. Sawing machine according to one of claims 1 and 2,
**characterized in that** the push rod (12) is adjustable along the saw blade holder (13).

4. Sawing machine with a machining table (2) and with a lifting device for a saw blade (1) for processing workpieces made of wood, plastic, and the like, with a crank drive which has a crank (7), and with a push rod (12) which is connected to a saw blade holder (13) supporting the saw blade (1) and is coupled to a transmission ratio (21), via which the crank (7) is connected to the saw blade holder (13) and which has a lever which is pivotable about a pivot axis (10),
wherein the saw blade is a circular saw blade (1), and the saw blade holder (13) is displaceable using the crank (7) from an idle position, in which the circular saw blade (1) is arranged underneath the machining table (2), into a working position, in which the circular saw blade (1) processes the workpieces located on the machining table (2),
**characterized in that**
the transmission ratio (21) has an inclined plane in the form of a single-arm lever, along which the push rod (12) and the crank (7) are displaceable.

5. Sawing machine according to claim 4,
**characterized in that** the angle of inclination (x) of the inclined plane (21) is adjustable.

6. Sawing machine according to one of claims 1 to 5,
**characterized in that** the crank (7) and/or the push rod (12) are variable in length.

## Revendications

1. Scieuse, dotée d'un plateau de machine (2) et d'un dispositif de levage pour une lame de scie (1) destinée au traitement de pièces usinées en bois, en matière synthétique et analogue, dotée d'un mécanisme à manivelle, qui comporte une manivelle (7) et d'une bielle de poussée (12), qui est reliée avec un porte-lame de scie (13), portant la lame de scie (1) et qui est accouplée avec un palier de transmission (9), par l'intermédiaire duquel la manivelle (7) est reliée avec le porte-lame de scie (13) et qui comporte un levier (9) à deux bras, qui est susceptible de pivoter autour d'un axe de pivotement (10),
la lame de scie étant une lame de scie circulaire (1) et à l'aide de la manivelle (7) le porte-lame de scie (13) étant réglable d'une position de repos, dans laquelle la lame de scie circulaire (1) est placée en-dessous du plateau de machine (2) dans une position de travail, dans laquelle la lame de scie circulaire (1) usine les pièces à usiner qui se trouvent sur le plateau de machine (2), **caractérisée en ce que** les bras du levier (8, 11) du levier (9) à deux bras se situent avec un angle obtus mutuel, **en ce que** l'axe de rotation (10) se situe dans la pointe du V du levier (9) à deux bras, **en ce que** la manivelle (7) est articulée sur l'un (8) bras de levier, et **en ce que** pour l'articulation de la bielle de poussée (12), l'autre bras de levier (11) comporte au moins deux raccordements (17) qui présentent un écart différent par rapport à l'axe de pivotement (10) du levier (9) à deux bras.

2. Scieuse selon la revendication 1,
**caractérisée en ce que** la manivelle (7) est réglable le long de l'un bras de levier (8) du levier (9) à deux bras.

3. Scieuse selon l'une quelconque des revendications 1 et 2,
**caractérisée en ce que** la bielle de poussée (12) est réglable le long du porte-lame de scie (13).

4. Scieuse dotée d'un plateau de machine (2) et d'un dispositif de levage pour une lame de scie (1) destinée au traitement de pièces usinées en bois, en matière synthétique et analogue, dotée d'un mécanisme à manivelle, qui comporte une manivelle (7) et d'une bielle de poussée (12), qui est reliée avec un porte-lame de scie (13), portant la lame de scie (1) et qui est accouplée avec un palier de transmission (21), par l'intermédiaire duquel la manivelle (7) est reliée avec le porte-lame de scie (13) et qui comporte un levier à deux bras, qui est susceptible de pivoter autour d'un axe de pivotement (10),
la lame de scie étant une lame de scie circulaire (1) et à l'aide de la manivelle (7), le porte-lame de scie (13) étant réglable d'une position de repos, dans laquelle la lame de scie circulaire (1) est placée en-dessous du plateau de machine (2) dans une position de travail, dans laquelle la lame de scie circulaire (1) usine les pièces à usiner qui se trouvent sur le plateau de machine (2), **caractérisée en ce que** le palier de transmission (21) comporte un plan oblique sous la forme d'un levier à un bras, le long duquel la bielle de poussée (12) et la manivelle (7) sont déplaçables.

5. Scieuse selon la revendication 4,
**caractérisée en ce que** l'angle d'inclinaison x du plan oblique (21) est réglable.

6. Scieuse selon l'une quelconque des revendications 1 à 5,
**caractérisée en ce que** la manivelle (7) et/ou la bielle de poussée (12) sont à longueur variable.
